# DEMANDE DE BREVET EUROPEEN

(11) **EP 4 539 314 A1**
(43) Date de publication de la demande: **16.04.2025**
(21) Numéro de dépôt: 24203164.9
(22) Date de dépôt: 27.09.2024
(51) Int. Cl.: H02M 1/00, H02M 1/32, H02M 3/158

(54) **CONVERTISSEUR DE TENSION CONTINUE COMPRENANT DEUX DISPOSITIFS COUPE-CIRCUITS**

(30) Priorité: 12.10.2023 FR 2310975
(71) Demandeur: Supergrid Institute, 69100 Villeurbanne (FR)
(72) Inventeur: GOMEZ ACERO, Daniel, 69100 Villeurbanne (FR); MOREL, Florent, 01000 Bourg en Bresse (FR); PAEZ ALVAREZ, Juan David, 69100 Villeurbanne (FR)
(74) Mandataire: Cabinet Beau de Loménie

(57) **Abrégé**

Convertisseur de tension (10) comportant des premier (11), deuxième (12), troisième (13), quatrième (14) et cinquième (15) terminaux continus ; au moins un bras (16,16',16") comprenant un point supérieur (16a) et un point inférieur (16b) entre lesquels il s'étend, un bras comportant des premier, deuxième, troisième et quatrième modules de conversion électrique (18) comprenant chacun une chaine de sous-modules, au moins un interrupteur de retour (36,36',36",38) commandable étant connecté entre un point milieu du bras et ledit troisième terminal continu ; au moins un premier dispositif coupe-circuit (30,30',30") commandable connecté en série avec le premier module de conversion électrique entre un premier point intermédiaire dudit bras et le premier terminal continu; et au moins un deuxième dispositif coupe-circuit (32,32',32") commandable connecté en série avec le quatrième module de conversion électrique entre un deuxième point intermédiaire dudit bras et le deuxième terminal continu.

## Description

### Domaine Technique

La présente invention concerne le domaine technique des convertisseurs de tension permettant de convertir une première tension continue en une seconde tension continue. Ces convertisseurs de tension sont également appelés convertisseurs de tension DC/DC. Ce type de convertisseurs est particulièrement adapté pour être implanté dans des installations d'alimentation électrique en courant continu haute tension (HVDC pour « High Voltage Direct Current » en langue anglaise). Les convertisseurs de tension DC/DC permettent la connexion d'une première portion de réseau d'alimentation électrique continu avec une seconde portion de réseau d'alimentation électrique continu.

La présente invention porte plus précisément sur les convertisseur de tension permettant de connecter une première portion de réseau électrique continu de topologie bipôle avec une seconde portion de réseau d'alimentation électrique continu de topologie monopôle.

Une portion de réseau électrique continu de topologie bipôle comprend traditionnellement une première ligne conductrice, une deuxième ligne conductrice, et une ligne de retour, par exemple une ligne de retour métallique. Lesdites lignes conductrices et ladite ligne de retour forment des conducteurs. Une telle portion de réseau d'alimentation électrique continu de topologie bipôle présente un premier pôle formé entre la première ligne conductrice et la ligne de retour, ainsi qu'un deuxième pôle formé entre la deuxième ligne conductrice et la ligne de retour.

Une portion de réseau d'alimentation électrique continu de topologie monopôle comprend traditionnellement deux lignes conductrices, également appelées conducteurs, définissant un unique pôle. Elle peut être de type monopôle asymétrique, auquel cas elle comprend une ligne conductrice de phase et une ligne conductrice de neutre. Elle peut également être de type monopôle symétrique, auquel cas elle comprend deux lignes conductrices de phase.

### Technique antérieure

On connait un convertisseur DC/DC tel que celui décrit dans la publication G.J. Kish et P.W. Le h n, *"Modeling Techniques for Dynamic and Steady-State Analysis of Modular Multilevel DC-DC Converters*". Ce convertisseur permet de connecter une première portion de réseau d'alimentation électrique continu, ayant une topologie bipôle et comprenant un premier pôle électrique et un deuxième pôle électrique, avec une seconde portion de réseau d'alimentation électrique continu ayant une topologie monopôle symétrique.

Le convertisseur de tension décrit dans ce document comporte des premier, deuxième, troisième, quatrième et cinquième terminaux continus. Le premier terminal continu est configuré pour être connecté au premier pôle de la première portion de réseau d'alimentation électrique continu de topologie bipôle tandis que le deuxième terminal continu est configuré pour être connecté au deuxième pôle de la première portion de réseau d'alimentation électrique continu de topologie bipôle. Le troisième terminal continu est configuré pour être relié à une ligne de retour de la première portion de réseau d'alimentation électrique continu. Les quatrième et cinquième terminaux continus sont configurés pour être reliés à la seconde portion de réseau d'alimentation électrique continu. Ce convertisseur de tension comprend en outre un bras comportant une pluralité de modules de conversion électrique connectés en cascade entre le premier terminal continu et le deuxième terminal continu. Ces modules de conversion électriques sont chacun munis de chaines de sous-modules.

Un inconvénient de ce convertisseur est qu'il créé un couplage entre les premier et deuxième pôles de la première portion de réseau d'alimentation électrique continu de topologie bipôle à laquelle il est connecté, compte-tenu des courants circulant entre les quatre modules de conversion électrique. Aussi, en cas de défaut ou perturbation sur le premier ou deuxième pôle de la première portion de réseau d'alimentation électrique continu, ce convertisseur de tension selon l'art antérieur engendre une perturbation sur l'autre pôle pourtant sain. En conséquence, en cas de défaut sur un seul des deux pôles, tous les échanges de puissance entre les première et seconde portions de réseau d'alimentation électrique continu doivent être interrompus et le convertisseur de tension complet doit être mis à l'arrêt pour une longue durée, afin de procéder à la maintenance et déconnecter le pôle en défaut. Le convertisseur doit ensuite être reconfiguré, au cours de ces opérations de maintenance, pour pouvoir fonctionner en mode dégradé. Dans ce mode de fonctionnement dégradé, ce convertisseur nécessite l'utilisation de sous-modules de topologie en pont-complet. Le comportement en cas de défauts de ce convertisseur n'est pas satisfaisant et ne correspond pas à ce qui est généralement attendu des convertisseurs connectés à une portion de réseau de topologie bipôle : on attend qu'un défaut sur un pôle ne perturbe pas l'autre pôle et qu'en cas de défaut, y compris interne au convertisseur, au moins la moitié de la puissance nominale du convertisseur de tension puisse être transférée à la seconde portion de réseau d'alimentation électrique sans interruption. En d'autres mots, ce convertisseur n'offre pas de redondance ce qui est préjudiciable.

### Exposé de l'invention

Un but de la présente invention est de proposer un convertisseur de tension remédiant aux problèmes précités.

Pour ce faire, l'invention porte sur un convertisseur de tension permettant de convertir une première tension continue en une seconde tension continue et inversement, le convertisseur de tension comportant :
- des premier, deuxième et troisième terminaux continus configurés pour être reliés électriquement respectivement à une première ligne conductrice, une deuxième ligne conductrice et une ligne de retour d'une première portion de réseau d'alimentation électrique continu de topologie bipôle ;
- des quatrième et cinquième terminaux continus configurés pour être reliés électriquement à une seconde portion de réseau d'alimentation électrique continu de topologie monopôle ;
- au moins un bras comprenant au moins un point supérieur et un point inférieur entre lesquels il s'étend, le point supérieur étant relié électriquement au premier terminal continu tandis que le point inférieur est relié électriquement au deuxième terminal continu, ledit au moins un bras comportant un premier module de conversion électrique connecté électriquement entre le point supérieur et un premier point intermédiaire du bras, un deuxième module de conversion électrique connecté électriquement entre ledit premier point intermédiaire et un point milieu du bras, un troisième module de conversion électrique connecté électriquement entre ledit point milieu et un deuxième point intermédiaire du bras, et un quatrième module de conversion électrique connecté électriquement entre ledit deuxième point intermédiaire et ledit point inférieur du bras, le premier point intermédiaire du bras étant connecté électriquement au quatrième terminal continu tandis que le deuxième point intermédiaire du bras est connecté électriquement au cinquième terminal continu, le point milieu étant connecté électriquement audit troisième terminal continu, au moins un interrupteur de retour commandable étant connecté entre ledit point milieu et ledit troisième terminal continu, ledit interrupteur de retour pouvant prendre une position ouverte et une position fermée, chacun des premier, deuxième, troisième et quatrième modules de conversion électrique comprenant une chaine de sous-modules commandables individuellement par un organe de commande propre à chaque sous-module et chaque sous-module comprenant un condensateur, l'organe de commande de chaque sous-module pouvant prendre au moins un premier état dans lequel le condensateur est inséré dans la chaine de sous-modules et un deuxième état dans lequel le condensateur n'est pas inséré dans ladite chaine de sous-modules, au moins l'un des modules de conversion électrique comprenant une inductance connectée en série avec la chaine de sous-modules dudit module de conversion électrique ;

- au moins un premier dispositif coupe-circuit commandable connecté en série avec le premier module de conversion électrique entre le premier point intermédiaire dudit bras et le premier terminal continu, le premier dispositif coupe-circuit pouvant prendre une position ouverte et une position fermée; et
- au moins un deuxième dispositif coupe-circuit commandable connecté en série avec le quatrième module de conversion électrique entre le deuxième point intermédiaire dudit bras et le deuxième terminal continu, le deuxième dispositif coupe-circuit pouvant prendre une position ouverte et une position fermée.

Sans sortir du cadre de l'invention, les premier, deuxième et troisième terminaux continus sont avantageusement configurés pour être reliés électriquement à un premier réseau d'alimentation électrique continu complet tandis que les quatrième et cinquième terminaux continus sont configurés pour être reliés électriquement à un second réseau d'alimentation électrique continu complet. Lesdites première et seconde portions de réseau d'alimentation électrique continu peuvent comprendre une ou plusieurs stations.

La première portion de réseau d'alimentation électrique continu comprend un premier pôle formé entre la première ligne conductrice et la ligne de retour, ainsi qu'un deuxième pôle formé entre la deuxième ligne conductrice et la ligne de retour. La seconde portion de réseau d'alimentation électrique continu comprend un unique pôle.

De manière non limitative, la seconde portion de réseau d'alimentation électrique continu peut être de type monopôle asymétrique, auquel cas elle présente une ligne conductrice de phase et une ligne conductrice de neutre. La seconde portion de réseau d'alimentation électrique continu peut également être de type monopôle symétrique, auquel cas elle comprend deux lignes conductrices de phase.

De préférence, la ligne de retour de la première portion de réseau d'alimentation électrique continu est une ligne de retour métallique. Ladite ligne de retour est avantageusement reliée à la terre. En fonctionnement normal de la première portion de réseau d'alimentation électrique continu, cette ligne de retour présente un potentiel inférieur au potentiel des autres lignes conductrices de cette première portion de réseau. La ligne de retour est une ligne basse-tension. Elle est configurée pour être placée à des potentiels par rapport à la terre de quelques centaines de volts voire quelques kilovolts au maximum.

De manière non limitative, le point supérieur dudit au moins un bras peut être relié au premier terminal continu directement ou indirectement. Autrement dit, un ou plusieurs composants peuvent être connectés entre le point supérieur du bras et le premier terminal continu.

De même, de manière non limitative, le point inférieur dudit au moins un bras peut être relié au deuxième terminal continu directement ou indirectement. Autrement dit, un ou plusieurs composants peuvent être connectés entre le point inférieur du bras et le deuxième terminal continu.

Les premier, deuxième, troisième et quatrième modules de conversion électrique sont connectés en cascade dans ledit au moins un bras. On comprend que le bras comprend au moins quatre chaines de sous-modules.

De manière non limitative, le premier point intermédiaire du bras peut être connecté indirectement au quatrième terminal continu. Dans ce cas, un ou plusieurs composants électroniques sont disposés entre ledit premier point intermédiaire et ledit quatrième terminal continu. Alternativement, et sans sortir du cadre de l'invention, le premier point intermédiaire du bras peut être connecté directement au quatrième terminal continu, auquel cas aucun composant, actif ou passif, n'est disposé entre ledit premier point intermédiaire et le quatrième terminal continu.

De manière non limitative, le deuxième point intermédiaire du bras peut être connecté indirectement au cinquième terminal continu. Dans ce cas, un ou plusieurs composants électroniques sont disposés entre ledit deuxième point intermédiaire et ledit cinquième terminal continu. Alternativement, et sans sortir du cadre de l'invention, le deuxième point intermédiaire du bras peut être connecté directement au cinquième terminal continu, auquel cas aucun composant, actif ou passif, n'est disposé entre ledit deuxième point intermédiaire et le cinquième terminal continu.

On comprend que le bras comprend au moins une inductance. Cette inductance, connectée en série avec la chaine de sous-modules d'au moins un des modules de conversion électrique, permet la génération et la circulation d'un courant électrique alternatif dans le bras. De préférence, chacun des premier et quatrième modules de conversion électrique comprend une inductance connectée en série avec la chaine de sous-modules dudit module de conversion électrique.

De préférence, les sous-modules des chaines de sous-modules des premier, deuxième, troisième et quatrième modules de conversion électrique dudit au moins un bras présentent une topologie en demi-pont ou une topologie en pont complet. Sans sortir du cadre de l'invention, un module de conversion électrique peut comprendre uniquement des sous-modules en demi-pont, uniquement des sous-modules en pont complet ou une combinaison de sous-modules en demi-pont et en pont complet.

De préférence, les deuxième et troisième modules de conversion électrique ne comprennent que des sous-modules en demi-pont. De préférence, les premier et quatrième modules de conversion électrique comprennent une combinaison de sous-modules en pont complet et de sous-modules en demi-pont.

Le convertisseur peut comprendre un ou plusieurs interrupteurs de retour. De préférence, le point milieu du bras est relié au troisième terminal continu par une ligne de liaison au retour. Ledit interrupteur de retour commandable est avantageusement connecté dans ladite ligne de liaison au retour.

Ledit interrupteur de retour commandable permet d'interrompre la circulation d'un courant électrique entre ledit point milieu du bras et ledit troisième terminal continu, lorsqu'il est placé en position ouverte.

Sans sortir du cadre de l'invention, le convertisseur de tension peut comprendre une pluralité de bras connectés en parallèle les uns par rapport aux autres. Dans ce cas, les points supérieurs des bras sont avantageusement connectés les uns aux autres et forment un noeud électrique et les points inférieurs des bras sont avantageusement connectés les uns aux autres et forment un noeud électrique. Le convertisseur de tension comprend alors avantageusement une pluralité de lignes de liaison au retour, chacune s'étendant entre le point milieu d'un des bras et un point de jonction relié électriquement au troisième terminal continu. De manière non limitative, le point de jonction peut être confondu avec le troisième terminal continu.

Le convertisseur de tension comprend avantageusement au moins un interrupteur de retour commandable connecté dans une ligne de liaison au retour entre ledit point de jonction et le point milieu d'un bras. Le convertisseur de tension comprend avantageusement un interrupteur de retour commandable connecté entre ledit point de jonction et ledit troisième terminal continu.

De manière non limitative, les premier et deuxième dispositifs coupe-circuits comprennent avantageusement un ou plusieurs organes de commutation choisis parmi : un ou plusieurs interrupteurs, par exemple des interrupteurs haute-tension, un ou plusieurs sectionneurs, un ou plusieurs disjoncteurs, ou encore un mélange de ces organes de commutation.

De préférence, mais de manière non limitative, le premier dispositif coupe-circuit consiste en un interrupteur. De préférence, mais de manière non limitative, le deuxième dispositif coupe-circuit consiste en un interrupteur.

De manière non limitative, le premier dispositif coupe-circuit peut être connecté dans ledit au moins un bras. De manière non limitative, le premier dispositif coupe-circuit peut être connecté dans ledit bras entre le premier module de conversion électrique et le premier point intermédiaire du bras, ou encore entre le premier module de conversion électrique et le point supérieur du bras.

Le premier dispositif coupe-circuit est configuré pour empêcher la circulation d'un courant électrique entre le premier point intermédiaire dudit bras et le premier terminal continu, lorsqu'il est placé en position ouverte, et pour autoriser la circulation d'un tel courant lorsqu'il est placé en position fermée. Le premier dispositif coupe-circuit permet de connecter ou déconnecter la première ligne conductrice, et donc le premier pôle, de la première portion de réseau d'alimentation électrique continu par rapport au bras du convertisseur et plus précisément par rapport aux deuxième, troisième et quatrième modules de conversion électrique.

De manière non limitative, le deuxième dispositif coupe-circuit peut être connecté dans ledit au moins un bras. De manière non limitative, le deuxième dispositif coupe-circuit peut être connecté dans ledit bras entre le quatrième module de conversion électrique et le deuxième point intermédiaire du bras, ou encore entre le quatrième module de conversion électrique et le point inférieur du bras. Le deuxième dispositif coupe-circuit est configuré pour empêcher la circulation d'un courant électrique entre le deuxième point intermédiaire dudit bras et le deuxième terminal continu, lorsqu'il est placé en position ouverte, et pour autoriser la circulation d'un tel courant lorsqu'il est placé en position fermée.

Le deuxième dispositif coupe-circuit permet de connecter ou déconnecter la deuxième ligne conductrice, et donc le deuxième pôle, de la première portion de réseau d'alimentation électrique continu par rapport au bras du convertisseur et plus précisément par rapport aux premier, deuxième et troisième modules de conversion électrique.

En fonctionnement normal du convertisseur de tension, les premier et deuxième dispositifs coupe-circuits sont placés en position fermée, de manière à connecter les première et deuxième lignes conductrices, et donc les premier et deuxième pôles, de la première portion de réseau d'alimentation électrique continu par rapport au(x) bras du convertisseur et à l'ensemble des modules de conversion électrique.

Contrairement aux dispositifs de l'art antérieur dans lesquels le ou les bras sont maintenus connectés à la ligne de retour, quel que soit le mode de fonctionnement, ledit au moins un interrupteur de retour du convertisseur de tension selon l'invention peut être ouvert, dans cette configuration de fonctionnement normal, de manière à déconnecter la ligne de retour de la première portion de réseau d'alimentation électrique continu par rapport au point milieu du bras du convertisseur de tension. Dans cette configuration de fonctionnement normal, les deuxième et troisième modules de conversion électrique sont traversés par un même courant.

Par ailleurs, les dispositifs coupe-circuits et ledit au moins un interrupteur de retour du convertisseur de tension selon l'invention permettent de placer ce dernier dans une configuration de fonctionnement dégradé. En fonctionnement dégradé, l'un des premier et deuxième pôles de la première portion de réseau d'alimentation électrique continu de topologie bipôle est déconnecté du convertisseur. Autrement dit, le convertisseur de tension peut être placé dans une première configuration de fonctionnement dégradé, lorsque le premier dispositif coupe-circuit est placé en position ouverte tandis que le deuxième dispositif coupe-circuit est placé en position fermée, et dans une deuxième configuration de fonctionnement dégradé, lorsque le deuxième dispositif coupe-circuit est placé en position ouverte et le premier dispositif coupe-circuit est placé en position fermée.

Le convertisseur de tension est configuré pour prendre une configuration de fonctionnement dégradé dans laquelle un des premier et deuxième dispositifs coupe-circuits est placé en position ouverte. Le convertisseur de tension est configuré pour prendre une configuration de fonctionnement normal dans laquelle les premier et deuxième dispositifs coupe-circuits sont placés en position fermée.

Le convertisseur de tension peut être placé dans cette configuration de fonctionnement dégradé en cas de panne ou de perturbation sur l'un des pôles de la première portion de réseau d'alimentation électrique continu ou lorsque l'on souhaite intervenir sur l'un de ces pôles, par exemple sur les lignes conductrices associées, notamment pour des opérations de maintenance.

Pour ce faire, le dispositif coupe-circuit correspondant est placé dans la position ouverte afin de déconnecter la première ligne conductrice, respectivement la deuxième ligne conductrice, par rapport au convertisseur de tension. Dès lors, le premier module de conversion électrique, respectivement le quatrième module de conversion électrique n'est plus traversé par un courant. Dans cette configuration de fonctionnement dégradé, lorsque le premier dispositif coupe-circuit est placé en position ouverte, le convertisseur de tension se comporte comme si le premier module de conversion électrique était déconnecté du bras du convertisseur. Dans cette configuration de fonctionnement dégradé, lorsque le deuxième dispositif coupe-circuit est placé en position ouverte, le convertisseur de tension se comporte comme si le quatrième module de conversion électrique était déconnecté du bras du convertisseur.

Dans le même temps, l'interrupteur de retour est placé en position fermée, afin de connecter la ligne de retour de la première portion de réseau d'alimentation électrique continu au point milieu du bras du convertisseur. Un intérêt est de fermer le circuit formé par le pôle sain, du côté du réseau d'alimentation électrique continu de topologie bipôle, et ainsi permettre la circulation d'un courant électrique dans ce pôle sain. La première portion de réseau d'alimentation électrique continu se comporte alors comme une portion de réseau de topologie monopôle asymétrique connectée au convertisseur de tension. Le convertisseur de tension se comporte alors comme un convertisseur de tension reliant une première portion de réseau d'alimentation électrique continu de topologie monopôle asymétrique et une seconde portion de réseau d'alimentation électrique continu de topologie monopôle symétrique ou asymétrique.

Autrement dit, les dispositifs coupe-circuits et ledit au moins interrupteur de retour du convertisseur de tension selon l'invention permettent de placer ledit convertisseur de tension dans une configuration de fonctionnement dégradé.

Le convertisseur de tension selon l'invention permet de poursuivre les échanges de puissance entre un pôle sain d'une première portion de réseau d'alimentation électrique de topologie bipôle et une seconde portion de réseau d'alimentation électrique de topologie monopôle, quand bien même un des pôles de ladite première portion de réseau d'alimentation électrique continu serait perturbée, en défaut ou encore lorsqu'il convient de déconnecter l'un de ces pôles, par exemple pour des opérations de maintenance. L'autre pôle, appelé pôle sain, continue d'opérer normalement.

Le convertisseur de tension selon l'invention satisfait aux exigences en termes de redondance dans la mesure où, contrairement à l'installation de la publication de G.J. Kish, la perturbation ou la présence d'un défaut sur un pôle de la première portion de réseau d'alimentation électrique n'entraine pas la mise à l'arrêt pour une longue durée du convertisseur de tension et donc de la conversion de tension et des transferts de puissance. Pour placer le convertisseur de tension dans la configuration de fonctionnement dégradé, il convient uniquement de commander le premier dispositif coupe-circuit ou le deuxième dispositif coupe-circuit. Le convertisseur de tension n'est pas nécessairement mis à l'arrêt, ou tout au plus un court instant le temps de la reconfiguration, afin de commander le premier ou deuxième dispositif coupe-circuit. Contrairement au dispositif de l'art antérieur, le convertisseur de tension selon l'invention permet un fonctionnement en configuration dégradée, sans qu'une opération de maintenance de longue durée, impliquant une déconnexion durable du pôle en défaut, ne soit nécessaire. Le convertisseur de tension selon l'invention permet un passage rapide et peu contraignant de la configuration de fonctionnement normal à la configuration de fonctionnement dégradé.

Dans cette configuration de fonctionnement dégradé, le convertisseur de tension selon l'invention permet de transmettre une puissance entre les première et deuxième portions de réseau d'alimentation électrique continu sensiblement égale à la moitié de la puissance transmise dans la configuration de fonctionnement normal du convertisseur de tension.

Afin de rétablir la configuration de fonctionnement normal, l'interrupteur de retour est placé en position ouverte et le dispositif coupe-circuit ayant été ouvert précédemment est placé en position fermée, de manière à connecter de nouveau la ligne conductrice correspondante, et donc le pôle associé, de la première portion de réseau d'alimentation électrique continu au convertisseur de tension.

On connait par ailleurs des convertisseurs de type DC-MMC selon l'art antérieur, comprenant trois modules de conversion électrique connectés en cascade dans un bras et pouvant être placés dans un mode de fonctionnement dégradé. Dans ce mode de fonctionnement dégradé, les modules de conversion supérieur et inférieur présentent toutefois des tensions négatives à leurs bornes, de sorte qu'il est nécessaire de les munir de nombreux sous-modules en pont complet.

Au contraire, le convertisseur de tension selon l'invention permet de s'affranchir de l'ajout de nombreux de sous-modules de topologie en pont complet par rapport au dispositif selon l'art antérieur. Le convertisseur de tension selon l'invention est placé dans la configuration de fonctionnement dégradé par mise en position ouverte de l'un des premier et deuxième dispositifs coupe-circuits, ni le premier module de conversion électrique, ni le quatrième module de conversion électrique ne présente de tension négative à ses bornes. Aussi, il n'est pas nécessaire de munir les premier et quatrième modules de conversion électrique exclusivement de sous-modules de type en pont complet.

Lesdits premier et quatrième modules de conversion électrique du convertisseur de tension selon l'invention comprennent de préférence un ou plusieurs sous-modules de topologie en demi-pont. Ceci permet de réduire le nombre de composants par rapport à un convertisseur de tension dont les modules de conversion électrique ne comprennent que des sous-modules en pont complet. L'encombrement et le coût du convertisseur de tension selon l'invention est donc réduit.

De préférence, le convertisseur de tension comprend un module de contrôle pour commander la mise en position ouverte ou fermée des dispositifs coupe-circuits et du ou des interrupteur(s) de retour.

Avantageusement, ledit premier dispositif coupe-circuit est disposé entre le point supérieur dudit bras et le premier terminal continu, tandis que le deuxième dispositif coupe-circuit est disposé entre le point inférieur du bras et le deuxième terminal continu. Un intérêt est de permettre la déconnexion complète, par rapport au convertisseur de tension, de la première ligne conductrice, et donc du premier pôle, de la première portion de réseau d'alimentation électrique continu. Ceci permet en outre la déconnexion complète, par rapport au convertisseur de tension, de la deuxième ligne conductrice, et donc du deuxième pôle, de la première portion de réseau d'alimentation électrique continu.

Dans ce mode de réalisation, on comprend que le dispositif coupe-circuit n'est pas connecté dans le bras. En outre, le point supérieur du bras est alors connecté indirectement au premier terminal continu et le point inférieur du bras est alors connecté indirectement au deuxième terminal continu.

De préférence, le convertisseur de tension comprend en outre au moins un dispositif de découplage connecté électriquement en série avec ledit au moins un interrupteur de retour entre ledit point milieu du bras et ledit troisième terminal continu, ledit dispositif de découplage étant configuré pour limiter la circulation d'un courant électrique alternatif vers ledit troisième terminal continu. En plus de protéger la première portion de réseau d'alimentation électrique continu contre la circulation d'un courant alternatif qui risquerait de l'endommager, le premier dispositif de découplage autorise la circulation de courants alternatifs dans l'ensemble des modules de conversion électrique dudit au moins un bras. Ces courants permettent l'échange d'énergie entre chacun des modules de conversion électrique du bras et éventuellement entre les différents bras du convertisseur de tension, ce qui est indispensable à l'équilibre énergétique du convertisseur de tension.

De préférence, le dispositif de découplage comprend au moins une inductance. Encore de préférence, le dispositif de découplage consiste en une inductance.

Alternativement, et sans sortir du cadre de l'invention, le dispositif de découplage peut comprendre une chaine de sous-modules, notamment une chaine de sous-modules de topologie en pont complet.

De manière non limitative, le dispositif de découplage peut être connecté entre l'interrupteur de retour et le point milieu du bras ou, alternativement, entre l'interrupteur de retour et le troisième terminal continu.

Lorsque le convertisseur de tension comprend une pluralité de bras, il comprend avantageusement une pluralité de dispositifs de découplage, chacun étant connecté dans une des lignes de liaison au retour reliant les points milieux des bras à un point de jonction relié électriquement au troisième terminal continu. Les dispositifs de découplage permettent alors les échanges d'énergie dans les différents bras du convertisseur de tension tout en empêchant l'apparition d'un court-circuit entre les différents bras.

De manière avantageuse, un premier interrupteur de retour commandable est connecté en série avec le dispositif de découplage, entre ledit dispositif de découplage et ledit point milieu du bras, et un deuxième interrupteur de retour commandable est connecté en série avec le dispositif de découplage, entre ledit dispositif de découplage et ledit troisième terminal continu.

Autrement dit, lesdits premier et deuxième interrupteurs de retour sont disposés de part et d'autre du dispositif de découplage, permettant d'isoler ledit dispositif de découplage par rapport au convertisseur de tension mais également par rapport à la première portion de réseau d'alimentation électrique continu lorsqu'ils sont placés en position ouverte.

Pour placer le convertisseur de tension dans la configuration de fonctionnement normal, l'ensemble desdits interrupteurs de retour est placé en position ouverte.

De préférence, pour placer le convertisseur de tension dans la configuration de fonctionnement dégradé, tous les premier(s) et deuxième(s) interrupteurs de retour sont placés en position fermée.

Lorsque le convertisseur de tension comprend une pluralité de bras, il comprend de préférence une pluralité de premiers interrupteurs de retour, chacun étant connecté dans une ligne de liaison propre à un des bras, en série l'un des dispositifs de découplage.

Le convertisseur de tension comprend de préférence un unique deuxième interrupteur de retour. Lorsque le convertisseur de tension comprend une pluralité de bras à chacun desquels est associé un dispositif de découplage, ledit unique deuxième interrupteur de retour est avantageusement connecté en série avec l'ensemble desdits dispositifs de découplage.

De préférence, le dispositif de découplage est relié à l'un des premier et deuxième interrupteurs de retour commandable par une liaison électrique, ladite liaison électrique présentant un point de connexion à la terre relié à la terre par l'intermédiaire d'un interrupteur de mise à la terre commandable.

De préférence, mais de manière non limitative, dans la configuration de fonctionnement normal du convertisseur de tension, l'interrupteur de mise à la terre est placé en position fermée, afin de connecter ledit dispositif de découplage à la terre. Un intérêt est d'éviter de maintenir ledit dispositif de découplage flottant, ce qui pourrait entrainer sa charge accidentelle, notamment dans un environnement haute tension. De préférence, l'interrupteur de mise à la terre est également placé en position fermée en cas de maintenance sur le dispositif de découplage. De préférence, dans la configuration de fonctionnement dégradé du convertisseur de tension, l'interrupteur de mise à la terre est placé en position ouverte, afin de ne pas connecter ledit dispositif de découplage à la terre.

Lorsque le convertisseur de tension comprend une pluralité de bras, et donc une pluralité de lignes de liaison s'étendant entre les points milieux des bras et un point de jonction, ledit point de connexion est avantageusement disposé entre ledit point de jonction et le troisième terminal continu.

Le convertisseur de tension comprend de préférence un unique interrupteur de mise à la terre associé à l'ensemble des dispositifs de découplage. Un intérêt est de pouvoir connecter à la terre l'ensemble des dispositifs de découplage facilement et rapidement en plaçant ledit unique interrupteur de mise à la terre en position fermée.

De préférence, le convertisseur de tension comprend en outre au moins un premier dispositif de filtrage connecté électriquement entre ledit premier point intermédiaire du bras et ledit quatrième terminal continu, ledit premier dispositif de filtrage étant configuré pour limiter la circulation d'un courant électrique alternatif vers ledit quatrième terminal continu.

En plus de protéger la deuxième portion de réseau d'alimentation électrique continu contre la circulation d'un courant alternatif qui risquerait de l'endommager, le premier dispositif de filtrage permet la circulation de courants alternatifs dans l'ensemble des modules de conversion électrique dudit au moins un bras. Ces courants alternatifs permettent l'échange d'énergie entre chacun des modules de conversion électrique du bras et éventuellement entre les différents bras du convertisseur de tension, ce qui garantit l'équilibre énergétique du convertisseur de tension.

On comprend que le premier point intermédiaire du bras est alors relié au quatrième terminal continu de manière indirecte par l'intermédiaire dudit premier dispositif de filtrage.

Avantageusement, lorsque le convertisseur de tension comprend une pluralité de bras, le convertisseur de tension comprend une pluralité de premiers dispositifs de filtrage, chacun desdits premiers dispositifs de filtrage étant connecté entre le premier point intermédiaire d'un bras et le quatrième terminal continu. Autrement dit, à chacun des bras est alors associé un premier dispositif de filtrage.

De préférence, le premier dispositif de filtrage comprend au moins une inductance.

Préférentiellement, le convertisseur de tension comprend en outre au moins un deuxième dispositif de filtrage connecté électriquement entre ledit deuxième point intermédiaire du bras et ledit cinquième terminal continu, ledit deuxième dispositif de filtrage étant configuré pour limiter la circulation d'un courant électrique alternatif vers ledit cinquième terminal continu.

De manière avantageuse, le premier dispositif de filtrage présente une valeur d'inductance équivalente réglable. Un intérêt est de pouvoir adapter la valeur d'inductance du premier dispositif de filtrage lorsque le convertisseur de tension est amené de la configuration de fonctionnement normal à la configuration de fonctionnement dégradé et inversement. En effet, le passage de la configuration de fonctionnement normal à la configuration de fonctionnement dégradé entraine des modifications dans les échanges d'énergie entre les modules de conversion électrique et éventuellement entre les bras. La possibilité d'ajuster l'inductance équivalente du premier dispositif de filtrage permet d'adapter sa valeur en fonction de la configuration de fonctionnement. Ceci permet notamment de réduire les pertes.

En particulier, dans la configuration de fonctionnement normal, le dispositif de filtrage permet d'éviter la circulation de courants indésirables entres les phases du convertisseur de tension. Dans la configuration de fonctionnement dégradé, le dispositif de filtrage permet de contrôler le courant dans les différents bras, en ajustant la tension à leurs bornes en régulant le nombre de sous-modules insérés dans la chaine de sous-modules correspondante. La possibilité d'adapter la valeur d'inductance équivalente du dispositif de filtrage permet de sélectionner une valeur d'inductance optimale selon la configuration de fonctionnement.

De préférence, le premier dispositif de filtrage est configuré pour insérer entre ledit premier point intermédiaire du bras et ledit quatrième terminal continu une première valeur d'inductance équivalente ou une deuxième valeur d'inductance équivalente, distincte de la première valeur d'inductance équivalente.

De préférence, le premier dispositif de filtrage est configuré de sorte que sa valeur d'inductance équivalente lorsque le convertisseur de tension est placé dans une configuration de fonctionnement normal est supérieure à sa valeur d'inductance équivalente lorsque le convertisseur de tension est placé dans une configuration de fonctionnement dégradé dans laquelle le premier dispositif coupe-circuit est placé en position ouverte.

Alternativement, et sans sortir du cadre de l'invention, le premier dispositif de filtrage peut être configuré de sorte que sa valeur d'inductance équivalente soit ajustable parmi une plage d'au moins trois valeurs distinctes.

Avantageusement, ledit premier dispositif de filtrage comprend une inductance principale et une inductance secondaire connectées en série l'une par rapport à l'autre entre le premier point intermédiaire et le quatrième terminal continu, le premier dispositif de filtrage comprenant en outre un organe sectionneur connecté en parallèle de l'inductance secondaire et pouvant prendre une position ouverte ou une position fermée dans laquelle ladite inductance secondaire est contournée.

Lorsque ledit organe sectionneur est placé en position ouverte, ladite inductance secondaire est insérée en série avec ladite inductance principale. La valeur d'inductance équivalente du dispositif de filtrage est alors égale à la somme des valeurs d'inductance de l'inductance principale et de l'inductance secondaire. Lorsque l'organe sectionneur est en position fermée, ladite inductance secondaire est court-circuitée et est par conséquent contournée. La valeur d'inductance équivalente du dispositif de filtrage est alors égale à la valeur d'inductance de l'inductance principale.

De préférence, ledit organe sectionneur du premier dispositif de filtrage est placé en position ouverte lorsque le convertisseur de tension est placé dans la configuration de fonctionnement normal.

Avantageusement, ledit organe sectionneur du premier dispositif de filtrage est placé en position fermée lorsque le convertisseur de tension est placé dans une configuration de fonctionnement dégradé dans laquelle le premier dispositif coupe-circuit est placé en position ouverte

Préférentiellement, au moins 10% des sous-modules des premier et quatrième modules de conversion électrique présentent une topologie en demi-pont. Un intérêt est de réduire le nombre de sous-modules ayant une topologie en pont complet en utilisant des sous-modules en demi-complet à la place. Ceci est rendu possible par l'architecture du convertisseur de tension selon l'invention, dans lequel les premier et quatrième modules de conversion électrique ne présentent pas de tension négative à leurs bornes lorsque le convertisseur de tension est placé dans la configuration de fonctionnement dégradé.

L'encombrement et le coût du convertisseur de tension sont réduits et le contrôle du convertisseur est facilité.

De préférence, le convertisseur de tension comprend une pluralité de bras connectés en parallèle les uns par rapport aux autres, chaque bras comprenant un point supérieur et un point inférieur entre lesquels il s'étend, le point supérieur de chacun des bras étant relié électriquement au premier terminal continu tandis que le point inférieur de chacun des bras est relié électriquement au deuxième terminal continu, chaque bras comportant un premier module de conversion électrique connecté électriquement entre le point supérieur et un premier point intermédiaire dudit bras, un deuxième module de conversion électrique connecté électriquement entre ledit premier point intermédiaire et un point milieu dudit bras, un troisième module de conversion électrique connecté électriquement entre ledit point milieu et un deuxième point intermédiaire dudit bras, et un quatrième module de conversion électrique connecté électriquement entre ledit deuxième point intermédiaire et ledit point inférieur du bras, le premier point intermédiaire de chacun des bras étant connecté électriquement au quatrième terminal continu tandis que le deuxième point intermédiaire de chacun des bras est connecté électriquement au cinquième terminal continu, le convertisseur de tension comprenant une pluralité de dispositifs de filtrage, un dispositif de filtrage étant connecté électriquement entre le quatrième terminal continu et le premier point intermédiaire de chacun des bras ainsi qu'entre le cinquième terminal continu et le deuxième point intermédiaire de chacun des bras, à chacun des bras étant associé une ligne de liaison au retour s'étendant chacune entre le point milieu d'un des bras et un point de jonction relié électriquement audit troisième terminal continu, au moins un interrupteur de retour commandable étant connecté entre le point milieu desdits bras et ledit troisième terminal continu, ledit au moins un interrupteur de retour pouvant prendre une position ouverte et une position fermée, le convertisseur de tension comprenant en outre une pluralité de dispositifs de découplage, un dispositif de découplage étant connecté électriquement dans chacune des lignes de liaison au retour, en série avec au moins un interrupteur de retour commandable, entre le point milieu du bras correspondant et ledit troisième terminal continu, chacun des premier, deuxième, troisième et quatrième modules de conversion électrique comprenant une chaine de sous-modules commandables.

Avantageusement, les points supérieurs de chacun des bras sont reliés entre eux et forment un même noeud électrique. Avantageusement, les points inférieurs de chacun des bras sont reliés entre eux et forment un même noeud électrique.

On comprend que chacune des chaines de sous-modules des modules de conversion électrique comprend des sous-modules commandables individuellement par un organe de commande propre à chaque sous-module, chaque sous-module comprenant un condensateur, l'organe de commande de chaque sous-module pouvant prendre au moins un premier état dans lequel le condensateur est inséré dans la chaine de sous-modules et un deuxième état dans lequel le condensateur n'est pas inséré dans ladite chaine de sous-modules.

De préférence, dans chacun des bras, au moins l'un des modules de conversion électrique comprend une inductance connectée en série avec la chaine de sous-modules dudit module de conversion électrique.

Lesdites lignes de liaison au retour sont reliées entre elles par le point de jonction. Le point de jonction peut être confondu ou distinct du troisième terminal continu. Le point de jonction peut être relié directement au troisième terminal continu. De préférence, le point de jonction est relié indirectement au troisième terminal continu, par l'intermédiaire d'un interrupteur de retour.

De préférence, mais de manière non limitative, le convertisseur de tension comprend un interrupteur de retour qui est connecté en série avec l'ensemble des dispositifs de découplage. Cet interrupteur de retour est avantageusement connecté entre le point de jonction des lignes de liaison au retour et le troisième terminal continu. Autrement dit, la mise en position ouverte de cet interrupteur de retour entraine la déconnexion de l'ensemble des dispositifs de découplage par rapport à la ligne de retour de la première portion de réseau d'alimentation électrique alternatif.

Alternativement, et sans sortir du cadre de l'invention, au moins un interrupteur de retour peut être connecté dans chacune des lignes de liaison au retour, chacun desdits interrupteurs de retour étant connecté en série avec le dispositif de découplage connecté dans la ligne de liaison au retour correspondante. Le convertisseur de tension comprend alors une pluralité de deuxièmes interrupteurs de retour.

Le convertisseur de tension comprend de préférence au moins deux bras connectés en parallèle, encore de préférence au moins trois bras connectés en parallèle, encore de préférence exactement trois bras connectés en parallèle.

L'invention porte par ailleurs sur un procédé de contrôle d'un convertisseur de tension tel que décrit précédemment, dans lequel le convertisseur de tension peut être placé dans une configuration de fonctionnement normal ou dans au moins une configuration de fonctionnement dégradé, et dans lequel, pour placer le convertisseur dans ladite configuration de fonctionnement normal, on place les premier et deuxième dispositifs coupe-circuits en position fermée et on place le ou les interrupteur(s) de retour en position ouverte, de manière à déconnecter le point milieu du bras du convertisseur de tension par rapport à la ligne de retour de la première portion de réseau d'alimentation électrique continu.

Le convertisseur de tension peut être placé dans une première configuration de fonctionnement dégradée, dans laquelle le premier dispositif coupe-circuit est placé en position ouverte, et dans une deuxième configuration de fonctionnement dégradée, dans laquelle le deuxième dispositif coupe-circuit est placé en position ouverte.

Dans la configuration de fonctionnement dégradé, l'un des premier et deuxième pôles de la première portion de réseau d'alimentation électrique continu de topologie bipôle est déconnecté du convertisseur de tension. Les échanges d'énergie sont poursuivis entre l'autre pôle, également appelé pôle sain, et la deuxième portion de réseau d'alimentation électrique continu.

De préférence, pour placer ledit convertisseur de tension dans ladite configuration de fonctionnement dégradé :
- on place l'un des premier et deuxième dispositifs coupe-circuits en position ouverte ;
- on place le ou les interrupteur(s) de retour en position fermée de manière à connecter électriquement le point milieu du bras à la ligne de retour de la première portion de réseau d'alimentation électrique continu.

Avantageusement, le convertisseur de tension comprend au moins un dispositif de découplage connecté électriquement entre ledit point milieu du bras et ledit troisième terminal continu, ledit dispositif de découplage étant configuré pour limiter la circulation d'un courant électrique alternatif vers ledit troisième terminal continu, un premier interrupteur de retour commandable étant connecté entre ledit dispositif de découplage et ledit point milieu du bras, un deuxième interrupteur de retour commandable étant connecté entre ledit dispositif de découplage et ledit troisième terminal continu, le dispositif de découplage étant relié à l'un des premier et deuxième interrupteurs de retour commandable par une liaison électrique, ladite liaison électrique présentant un point de connexion à la terre relié à la terre par l'intermédiaire d'un interrupteur de mise à la terre commandable, et pour placer le convertisseur de tension dans la configuration de fonctionnement normal, on place le ou les interrupteur(s) de mise à la terre en position fermée.

Le dispositif de découplage est alors relié à la terre.

On comprend que dans la configuration de fonctionnement normal, les premier et deuxième interrupteurs de retour sont placés en position ouverte, de sorte que le dispositif de découplage est isolé par rapport au bras du convertisseur de tension et par rapport à la ligne de retour de la première portion de réseau d'alimentation électrique continu.

Préférentiellement, pour placer le convertisseur de tension dans ladite au moins une configuration de fonctionnement dégradé, on place le ou les interrupteur(s) de mise à la terre en position ouverte. Le dispositif de découplage n'est alors plus connecté à la terre.

De manière avantageuse, le convertisseur de tension comprend en outre au moins un premier dispositif de filtrage comprenant une inductance principale et une inductance secondaire connectées en série entre le premier point intermédiaire et le quatrième terminal continu, le premier dispositif de filtrage comprenant en outre un organe sectionneur connecté en parallèle de l'inductance secondaire et pouvant prendre une position fermée dans laquelle ladite inductance secondaire est contournée, le convertisseur de tension comprenant en outre un deuxième dispositif de filtrage comprenant une inductance principale et une inductance secondaire connectées en série entre le deuxième point intermédiaire et le cinquième terminal continu, le deuxième dispositif de filtrage comprenant en outre un organe sectionneur connecté en parallèle de l'inductance secondaire et pouvant prendre une position fermée dans laquelle ladite inductance secondaire du deuxième dispositif de filtrage est contournée, et, pour placer le convertisseur de tension dans la configuration de fonctionnement normal, on place lesdits organes sectionneurs des premier et deuxième dispositifs de filtrage en position ouverte.

Dans cette configuration de fonctionnement normal, les inductances secondaires des premier et deuxième dispositifs de filtrage sont insérées en série avec les inductances principales et la valeur d'inductance équivalente des premier et deuxième dispositifs de filtrage est maximale.

De préférence, pour placer le convertisseur de tension dans ladite au moins une configuration de fonctionnement dégradé, on place l'organe sectionneur de l'un des premier et deuxième dispositifs de filtrage en position fermée. Aussi, l'inductance secondaire dudit dispositif de filtrage est contournée et la valeur d'inductance équivalente de ce dispositif de filtrage est réduite, et est minimale.

De préférence, l'organe sectionneur du premier dispositif de filtrage est placé en position fermée, lorsque le convertisseur de tension est placé dans une configuration de fonctionnement dégradé dans laquelle le premier dispositif coupe-circuit est placé en position ouverte.

De préférence, l'organe sectionneur du deuxième dispositif de filtrage est placé en position fermée, lorsque le convertisseur de tension est placé dans une configuration de fonctionnement dégradé dans laquelle le deuxième dispositif coupe-circuit est placé en position ouverte.

L'invention porte également sur une installation de transport de courant continu haute tension comprenant :
- une première portion de réseau d'alimentation électrique continu de topologie bipôle comprenant une première ligne conductrice, une deuxième ligne conductrice et une ligne de retour ;
- une seconde portion de réseau d'alimentation électrique continu de topologie monopôle ; et
- au moins un convertisseur de tension tel que décrit précédemment.

### Brève description des dessins

L'invention sera mieux comprise à la lecture de la description qui suit de modes de réalisation de l'invention donnés à titre d'exemples non limitatifs, en référence aux dessins annexés, sur lesquels :
[Fig. 1]La figure 1 illustre une installation de transport de courant continu haute tension selon l'invention;
[Fig. 2]La figure 2 illustre un premier mode de réalisation d'un convertisseur de tension selon l'invention dans une configuration de fonctionnement normal;
[Fig. 3]La figure 3 illustre un sous-module, de topologie demi-pont, du convertisseur de tension de la figure 2;
[Fig. 4]La figure 4 illustre un sous-module, de topologie en pont complet, du convertisseur de tension de la figure 2;
[Fig. 5]La figure 5 illustre le convertisseur de tension de la figure 2 dans une configuration de fonctionnement dégradé, où un premier pôle est déconnecté ;
[Fig. 6]La figure 6 illustre un deuxième mode de réalisation d'un convertisseur de tension selon l'invention dans une configuration de fonctionnement normal;
[Fig. 7]La figure 7 illustre le convertisseur de tension de la figure 6 dans une configuration de fonctionnement dégradé ; et
[Fig. 8]La figure 8 illustre un troisième mode de réalisation d'un convertisseur de tension selon l'invention.

### Description des modes de réalisation

L'invention porte sur un convertisseur de tension DC/DC, notamment un convertisseur de tension particulièrement adapté pour être implanté dans une installation HVDC. Un tel convertisseur de tension est configuré pour convertir une première tension continue **U1** en une seconde tension continue **U2** et inversement. L'invention porte plus précisément sur un convertisseur de tension reconfigurable pouvant être placé dans une configuration de fonctionnement normal et dans une configuration de fonctionnement dégradé. L'invention porte par ailleurs sur une installation de transport de courant continu haute tension comprenant un tel convertisseur de tension ainsi que sur un procédé de contrôle d'un tel convertisseur de tension.

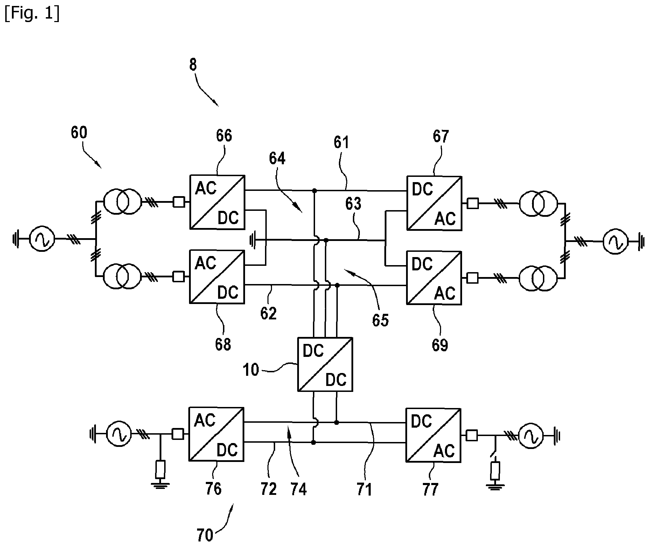

La figure **1** illustre une installation **8** de transport de courant continu haute tension comprenant un convertisseur de tension **10** selon l'invention. Cette installation **8** comprend une première portion de réseau d'alimentation électrique **60** et une seconde portion de réseau d'alimentation électrique continu **70.** La première portion de réseau d'alimentation électrique continu **60** est de topologie bipôle. Elle comprend une première ligne conductrice **61,** une deuxième ligne conductrice **62** et une ligne de retour **63.** Les première et deuxième lignes conductrices **61,62** sont également appelées conducteurs. La première portion de réseau d'alimentation électrique continu **60** comprend un premier pôle **64** formé par la première ligne conductrice **61** et la ligne de retour **63,** ainsi qu'un deuxième pôle **65** formé par la deuxième ligne conductrice **62** et la ligne de retour **63.** Dans cet exemple non limitatif, la ligne de retour **63** est une ligne de retour métallique. Ladite ligne de retour **63** est une ligne basse-tension.

La première portion de réseau d'alimentation électrique continu **60** comprend une première station **66,** une deuxième station **67,** une troisième station **68** et une quatrième station **69** formées chacune d'un convertisseur de tension AC/DC. Les premières et deuxième stations **66,67** sont reliées entre-elles électriquement par la première ligne conductrice **61** et par la ligne de retour **63.** Les troisième et quatrième stations **68,69** sont reliées entre-elles électriquement par la deuxième ligne conductrice **62** et par la ligne de retour **63.**

La seconde portion de réseau d'alimentation électrique continu **70** est de topologie monopôle symétrique. Sans sortir du cadre de l'invention, ladite seconde portion de réseau d'alimentation électrique continu **70** pourrait être de topologie monopôle asymétrique. Elle comprend une première ligne conductrice **71** et une deuxième ligne conductrice **72.** Les première et deuxième lignes conductrices **71,72** sont également appelées conducteurs. La seconde portion de réseau d'alimentation électrique continu **70** comprend un unique pôle **74** formé par la première ligne conductrice **71** et la deuxième ligne conductrice **72.** La seconde portion de réseau d'alimentation électrique continu **70** comprend une première station **76** et une deuxième station **77** reliées entre elles par les première et deuxième lignes conductrices **71,72.**

Le convertisseur de tension **10** connecte entre elles les première et seconde portions de réseau d'alimentation électrique continu **60,70.**

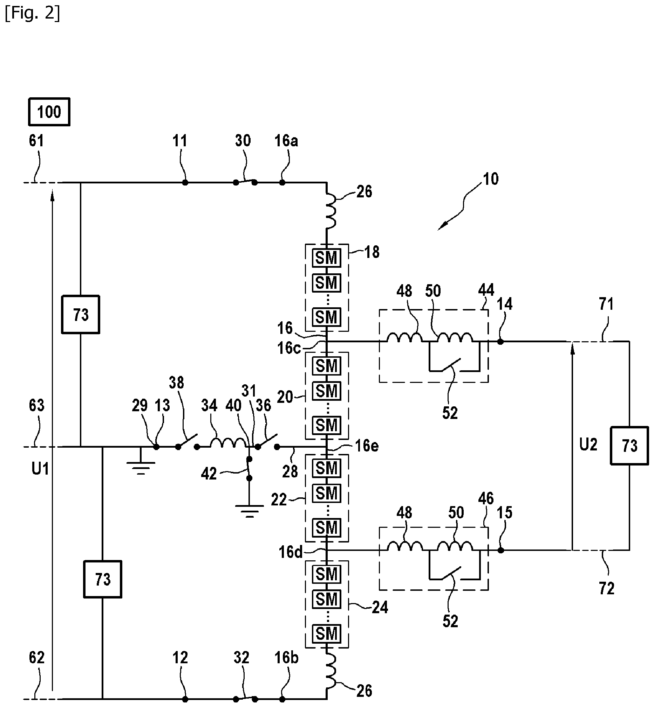

La figure **2** illustre un premier mode de réalisation d'un convertisseur de tension **10** selon l'invention. Ce convertisseur de tension **10** comprend un premier terminal continu **11,** un deuxième terminal continu **12,** un troisième terminal continu **13,** un quatrième terminal continu **14** et un cinquième terminal continu **15.** Les premier, deuxième et troisième terminaux continus **11,12,13** sont configurés pour être reliés électriquement à la première portion de réseau d'alimentation électrique continu **60,** tandis que les quatrième et cinquième terminaux continus **14,15** sont configurés pour être reliés électriquement à la seconde portion de réseau d'alimentation électrique continu **70.**

Plus précisément, les premier et deuxième terminaux continus **11,12** sont configurés pour être connectés respectivement aux première et deuxième lignes conductrices **61,62** de la première portion de réseau d'alimentation électrique continu **60** et le troisième terminal continu **13** est configuré pour être connecté à la ligne de retour **63**. Les quatrième et cinquième terminaux continus **14,15** sont configurés pour être connectés aux première et deuxième lignes conductrices **71,72** de la seconde portion de réseau d'alimentation électrique continu **70**.

Dans ce premier mode de réalisation, le convertisseur de tension **10** comprend un unique bras **16** comprenant un point supérieur **16a** et un point inférieur **16b** entre lesquels il s'étend. Le bras **16** comprend outre un premier point intermédiaire **16c**, un deuxième point intermédiaire **16d** et un point milieu **16e.** Le bras **16** comprend quatre modules de conversion électrique. Plus précisément, il comprend un premier module de conversion électrique **18** connecté électriquement entre le point supérieur **16a** et le premier point intermédiaire **16c** du bras. Il comprend de plus un deuxième module de conversion électrique **20** connecté électriquement entre ledit premier point intermédiaire **16c** et le point milieu **16e** du bras **16**. Il comprend en outre un troisième module de conversion électrique **22** connecté électriquement entre ledit point milieu **16e** et le deuxième point intermédiaire **16d** du bras. Il comprend enfin un quatrième module de conversion électrique **24** connecté électriquement entre ledit deuxième point intermédiaire **16d** et ledit point inférieur **16b** du bras **16**. Autrement dit, les quatre modules de conversion électrique **18,20,22,24** sont connectés en cascade dans le bras.

Chacun des premier, deuxième, troisième et quatrième modules de conversion électrique **18,20,22,24** comprend une chaine de sous-modules **SM.** Ces sous-modules **SM** sont connectés en séries les uns par rapport aux autres dans le bras **16**. Les sous-modules **SM** sont commandables individuellement suivant une séquence souhaitée afin de modifier la tension aux bornes de chacune des chaines de sous-modules. Chaque chaine de sous-modules **SM** peut être modélisée par une source de tension contrôlable apte à générer une tension à ses bornes dépendant du nombre de condensateurs insérés et mis en série dans ladite chaine de sous-modules.

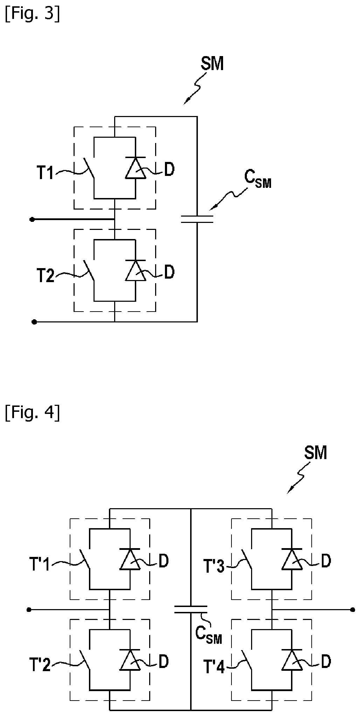

La figure **3** illustre un sous-module **SM** ayant une topologie en demi-pont. Ce sous-module **SM** comprend un condensateur **C_{SM}**, et un organe de commande **T1,T2** permettant de commander individuellement le sous-module **SM.** De manière non limitative, l'organe de commande **T1,T2** comporte un premier élément de commutation électronique **T1** tel qu'un transistor bipolaire à grille isolée (« IGBT : Insulated Gate Bipolar Transistor » en langue anglaise) connecté en série avec le condensateur **C_{SM}**. Ce premier élément de commutation **T1** et ce condensateur **C_{SM}** sont montés en parallèle d'un deuxième élément de commutation électronique **T2**, qui peut aussi être un transistor bipolaire à grille isolée (IGBT). Ce deuxième élément de commutation électronique **T2** est connecté entre les bornes d'entrée et de sortie du sous-module **SM.** Les premier et deuxième éléments de commutation **T1** et **T2** sont tous deux associés à une diode antiparallèle **D** représentée sur la figure **3****.** De manière non limitative, les éléments de commutations pourraient être de type IGBTs, MOSFETs ou des IGCTs.

L'organe de commande **T1,T2** de chaque sous-module **SM** peut prendre un premier état dans lequel le condensateur **C_{SM}** est inséré dans la chaine de sous-modules correspondante et un deuxième état dans lequel le condensateur n'est pas inséré dans ladite chaine de sous-modules. De manière non limitative, l'organe de commande **T1,T2** peut prendre en outre un état non-commandé dans lequel les premier et deuxième éléments de commutation **T1,T2** sont ouverts de sorte que l'insertion du condensateur **C_{SM}** dépend du signe du courant circulant dans le demi-bras correspondant, compte-tenu des diodes anti-parallèles.

La figure **4** illustre un sous-module de topologie en pont complet, ou « Full-bridge » en langue anglaise. Dans cette topologie, le sous-module comprend quatre éléments de commutation **T'1,T'2,T'3,T'4,** chacun étant associé en parallèle avec une diode antiparallèle **D.**

Dans l'exemple de la figure **2**, les deuxièmes et troisièmes modules de conversion électrique **20,22** ne comprennent que des sous-modules de topologie en demi-pont, ou « Half-bridge » en langue anglaise. Par ailleurs, les premier et quatrième modules de conversion électrique comprennent une combinaison de sous-modules en demi-pont et de sous-modules en pont complet.

Tel qu'on le constate sur la figure **2****,** une inductance **26** est connectée en série avec les sous-modules du premier module de conversion électrique **18,** entre lesdits sous-modules et le point supérieur **16a** du bras. Une autre inductance **26** est connectée en série avec les sous-modules du quatrième module de conversion électrique **24,** entre lesdits sous-modules et le point inférieur **16b** du bras **16.** Ces inductances **26** permettent la génération et la circulation d'un courant électrique dans le bras, permettant ainsi les échanges d'énergie entre les quatre modules de conversion électrique.

Selon l'invention, le convertisseur de tension **10** comprend un premier dispositif coupe-circuit **30** commandable et un deuxième dispositif coupe-circuit **32** commandable. Le premier dispositif coupe-circuit **30** est connecté en série avec le premier module de conversion électrique **18** entre le premier point intermédiaire **16c** dudit bras **16** et le premier terminal continu **11.** Plus précisément, dans cet exemple non limitatif, le premier dispositif coupe-circuit **30** est connecté entre le point supérieur **16a** du bras et le premier terminal continu **11**. Le premier dispositif coupe-circuit **30** est donc disposé entre le premier module de conversion électrique **18** et le premier terminal continu **11**. Le deuxième dispositif coupe-circuit **32** est connecté en série avec le quatrième module de conversion électrique **24** entre le deuxième point intermédiaire **16d** dudit bras **16** et le deuxième terminal continu **12**. Plus précisément, dans cet exemple non limitatif, le deuxième dispositif coupe-circuit **32** est connecté entre le point inférieur **16b** du bras et le deuxième terminal continu **12**. Le deuxième dispositif coupe-circuit **32** est donc disposé entre le quatrième module de conversion électrique **24** et le deuxième terminal continu **12**.

Dans cet exemple non limitatif, les premier et deuxième dispositifs coupe-circuits **30,32** consistent chacun en un interrupteur. Les premier et deuxième dispositifs coupe-circuits **30,32** peuvent prendre une position ouverte et une position fermée, correspondant à la position ouverte ou fermée de l'interrupteur les constituants.

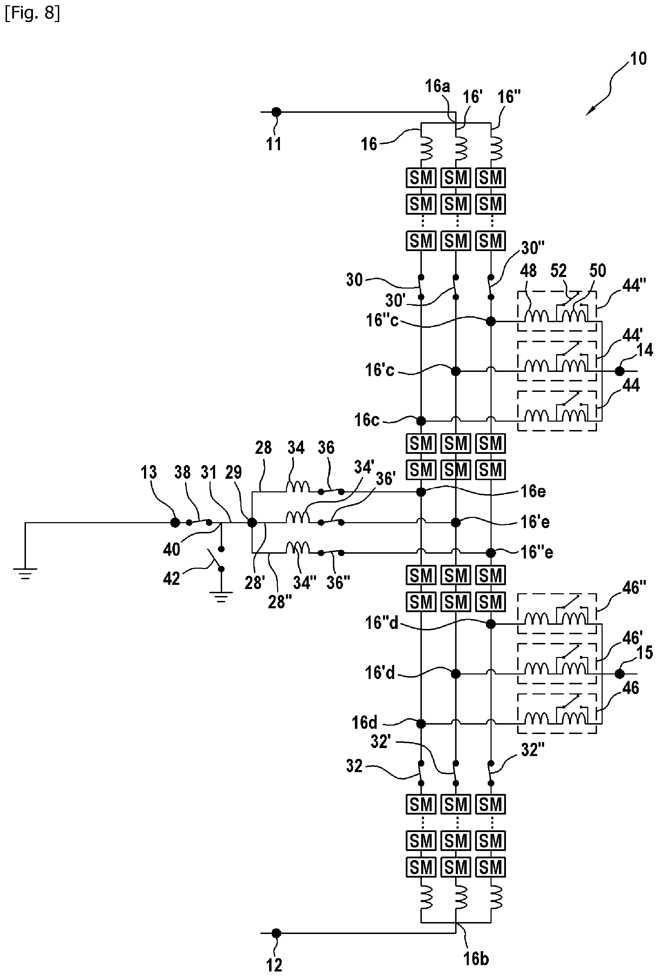

Alternativement, le premier dispositif coupe-circuit **30** peut être connecté dans un bras, comme cela sera détaillé en référence au mode de réalisation de la figure **8**.

Selon l'invention, le point milieu **16e** du bras est relié électriquement au troisième terminal continu **13**. Le convertisseur de tension comprend une ligne de liaison **28** reliant ledit point milieu **16e** et un point de jonction **29** qui est ici confondu avec ledit troisième terminal continu **13**. Le convertisseur de tension **10** comprend un dispositif de découplage **34** connecté dans ladite ligne de liaison **28** entre le point milieu **16e** du bras **16** et le troisième terminal continu **13**. Le dispositif de découplage **34** consiste dans cet exemple non limitatif en une inductance connectée dans ladite ligne de liaison **28**. Le dispositif de découplage **34** permet de limiter la circulation d'un courant électrique alternatif vers ledit troisième terminal continu **13**.

Le convertisseur de tension **10** comprend par ailleurs un premier interrupteur de retour **36** connecté en série dans ladite ligne de liaison **28** entre le point milieu du bras **16e** et le dispositif de découplage **34**. Le convertisseur de tension comprend en outre un deuxième interrupteur de retour **38** connecté en série avec le dispositif de découplage et le premier interrupteur de retour, dans ladite ligne de liaison **28** entre le dispositif de découplage **34** et le troisième terminal continu **13**. Le dispositif de découplage **34** est donc disposé entre le premier interrupteur de retour **36** et le deuxième interrupteur de retour **38**.

Par ailleurs, le dispositif de découplage **34** et le premier interrupteur de retour **36** sont reliés entre eux par une liaison électrique **31** présentant un point de connexion à la terre **40.** De manière non limitative, ce point de connexion à la terre **40** est donc disposé entre le dispositif de découplage **34** et le premier interrupteur de retour **36.** Ce point de connexion à la terre **40** est relié à la terre par l'intermédiaire d'un interrupteur de mise à la terre **42** commandable.

Dans cet exemple non limitatif, le point milieu **16e** du bras **16** et le troisième terminal continu **13** sont reliés entre eux de manière indirecte, par l'intermédiaire des premier et deuxième interrupteurs de retour **36,38** et du dispositif de découplage **34.**

Le convertisseur de tension comprend de plus un premier dispositif de filtrage **44** et un deuxième dispositif de filtrage **46.** Le premier dispositif de filtrage **44** est connecté entre le premier point intermédiaire **16c** du bras **16** et le quatrième terminal continu **14.** Le deuxième dispositif de filtrage **46** est connecté entre le deuxième point intermédiaire **16d** du bras **16** et le cinquième terminal continu **15.** Le premier point intermédiaire **16c** du bras est donc relié électriquement au quatrième terminal continu **14,** ici de manière indirecte par l'intermédiaire du premier dispositif de filtrage **44.** De même, le deuxième point intermédiaire **16d** du bras est relié électriquement au cinquième terminal continu **15,** ici de manière indirecte par l'intermédiaire du deuxième dispositif de filtrage **46.**

De manière non limitative, les premier et deuxième dispositifs de filtrage **44,46** sont identiques. Ils comprennent chacun une inductance principale **48** et une inductance secondaire **50** connectées en série l'une par rapport à l'autre en le premier point intermédiaire **16c,** respectivement le deuxième point intermédiaire **16d,** et le quatrième terminal continu **14,** respectivement le cinquième terminal continu **15.** Les premier et deuxième dispositifs de filtrage **44,46** comprennent en outre chacun un organe sectionneur **52,** consistant ici en un interrupteur, connecté en parallèle avec l'inductance secondaire **50.** L'organe sectionneur **52** est configuré pour prendre une position ouverte ou une position fermée. En position ouverte de l'organe sectionneur **52,** l'inductance secondaire **50** est insérée en série avec l'inductance principale **48.** En position fermée de l'organe sectionneur **52,** l'inductance secondaire **50** est court-circuitée et donc contournée. Un intérêt est de pouvoir ajuster la valeur d'inductance équivalente des dispositifs de filtrage **44,46.**

Le convertisseur de tension **10** est configuré pour convertir une première tension continue **U1** entre les première et deuxième lignes conductrices **61,62** de la première portion de réseau d'alimentation électrique continu **60** en une seconde tension continue **U2** entre les première et deuxième lignes conductrices **71,72** de la seconde portion de réseau d'alimentation électrique continu **70,** et inversement.

Dans cet exemple non limitatif de la figure **2****,** où le convertisseur de tension **10** ne comprend qu'un seul bras **16,** des filtres DC **73** sont connectés entre les premier et troisième terminaux continus **11,13,** entre les troisième et deuxième terminaux continus **13,12** et entre les quatrième et cinquième terminaux continus **14,15.**

Le convertisseur de tension **10** comprend par ailleurs un module de contrôle **100** configuré pour commander les premier et deuxième dispositifs coupe-circuits **30,32,** les premier et deuxième interrupteurs de retour **36,38,** l'interrupteur de mise à la terre **42** et les organes sectionneurs **52** des premier et deuxième dispositifs de filtrage **44,46.** Le module de contrôle **100** commande également les organes de commande **T1,T2,T'1,T'2,T'3,T'4** des sous-modules des modules de conversion électrique **18,20,22,24.**

Dans l'exemple de la figure **2****,** le convertisseur de tension **10** est placé dans une configuration de fonctionnement normal, ici au moyen du dispositif de contrôle **100.** Les premier et deuxième pôles **64,65** de la première portion de réseau d'alimentation électrique continu **60** sont sains et opérationnels. Le convertisseur de tension assure les échanges d'énergie entre la première portion de réseau d'alimentation électrique continu **60** et la seconde portion de réseau d'alimentation électrique continu **70.**

Dans cette configuration de fonctionnement normal du convertisseur de tension **10,** les premier et deuxième dispositifs coupe-circuits **30,32** sont placés en position fermée, de sorte que la première ligne conductrice **61** et la deuxième ligne conductrice **62** de la première portion de réseau d'alimentation électrique continu **60** sont connectées électriquement au bras **16** du convertisseur de tension.

En outre, dans cette configuration de fonctionnement normal, les premier et deuxième interrupteurs de retour **36,38** sont placés en position ouverte de manière à déconnecter la ligne de retour **63** de la première portion de réseau d'alimentation électrique continu **60** par rapport au bras **16.** Le dispositif de découplage **34** est en outre déconnecté de la première portion de réseau d'alimentation électrique continu **60** et du bras **16** et est donc isolé par rapport à ces derniers. L'interrupteur de mise à la terre **42** est en outre placé en position fermée, de sorte que le dispositif de découplage **34** est relié électriquement à la terre. Dans ce mode de réalisation où le convertisseur de tension **10** ne comprend qu'un seul bras **16,** l'ouverture des deux interrupteurs de retour **36,38** permet de déconnecter le point milieu **16e** du bras **16** par rapport à la terre, tout en évitant de maintenir une borne du dispositif de découplage **34** connectée à un potentiel variable.

Par ailleurs, dans cette configuration de fonctionnement normal, les organes sectionneurs **52** des premier et deuxième dispositifs de filtrage **44,46** sont placés position ouverte de sorte que les inductances secondaires **50** sont insérées en série avec les inductances principales **48**. La valeur d'inductance équivalente du premier dispositif de filtrage **44** est donc égale à la somme des valeurs d'inductance de l'inductance principale **48** et de l'inductance secondaire **50**. La valeur d'inductance équivalente du premier dispositif de filtrage **44** est donc maximale. Un intérêt est de réduire l'intensité du courant AC interne, et par conséquent les pertes associées. Il en est de même pour le deuxième dispositif de filtrage **46**.

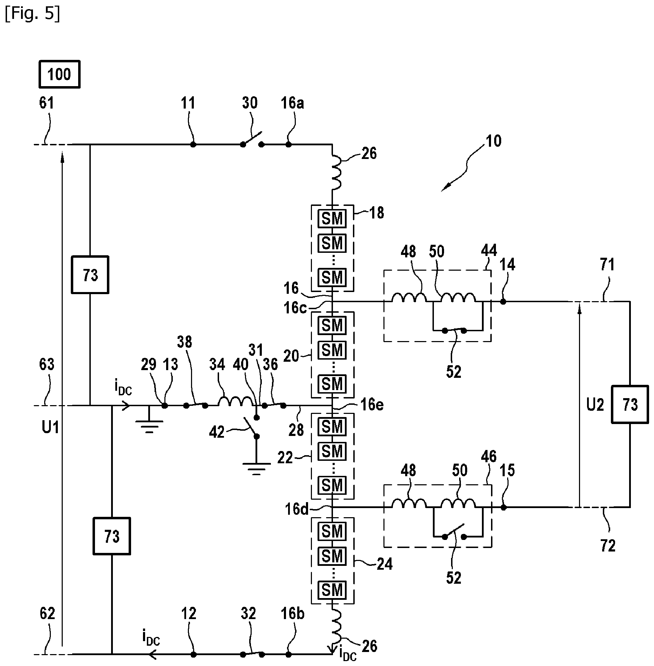

Le convertisseur de tension **10** peut également être placé dans une configuration de fonctionnement dégradé illustrée en figure **5**. Dans l'exemple de la figure **5**, le premier pôle **64** de la première portion de réseau d'alimentation électrique continu **60** est considéré en défaut, par exemple en raison d'une panne ou d'une perturbation sur cette portion de réseau, et doit être déconnecté des modules de conversion électrique **18,20,22,24** du convertisseur de tension. Alternativement, la déconnexion de ce premier pôle pourrait être commandée pour réaliser des opérations de maintenance. Pour placer le convertisseur de tension **10** en configuration de fonctionnement dégradé, le premier dispositif coupe-circuit **30** est placé en position ouverte afin d'interrompre la connexion de la première ligne conductrice de la première portion de réseau d'alimentation électrique continu **60** par rapport au bras **16** et aux modules de conversion électrique qu'il comprend. Le premier pôle **64** est donc déconnecté du bras et des modules de conversion électrique. Dans le même temps, le deuxième dispositif coupe-circuit **32** est maintenu en position fermée afin de maintenir le deuxième pôle **65** connecté au bras **16**. De plus, les premier et deuxième interrupteurs de retour **36,38** sont placés en position fermée, afin de connecter le point milieu **16e** du bras **16** à la ligne de retour **63** de la première portion de réseau d'alimentation électrique continu, via le dispositif de découplage **34**.

Dès lors, le premier module de conversion électrique **18** n'est plus traversé par un courant et le convertisseur de tension **10** se comporte comme si le premier module de conversion électrique **18** était déconnecté du bras **16**. Seul le deuxième pôle **65** de la première portion de réseau d'alimentation électrique continu **60** échange de l'énergie avec la seconde portion de réseau d'alimentation électrique continu **70**. La puissance reçue par la seconde portion de réseau d'alimentation électrique continu **70** est alors environ égale à la moitié de la puissance qu'elle reçoit lorsque le convertisseur de tension est dans la configuration de fonctionnement normal. La circulation du courant continu i_{DC} dans cette configuration de fonctionnement dégradé sont illustrés sur cette figure. On constate que ce courant continu i_{DC} circule depuis le troisième terminal **13** vers le deuxième terminal continu **12.** En outre, un courant alternatif circule dans la boucle formé par le filtre DC **73,** le dispositif de découplage 34 et les troisième et quatrième modules de conversion électrique **22,24.**

En outre, dans cette configuration de fonctionnement dégradé, le premier module de conversion électrique **18** n'est pas utilisé, de sorte qu'il est suffisant de munir ce premier module de conversion électrique **18** de sous-modules **SM** en demi-pont. Il n'est pas nécessaire d'inclure dans ce premier module de conversion électrique **18** des sous-modules en pont complet, contrairement aux convertisseurs de l'art antérieur.

Par ailleurs, dans cette configuration de fonctionnement dégradé illustrée en figure **5****,** l'organe sectionneur **52** du premier dispositif de filtrage **44** est placé en position fermée afin de contourner l'inductance secondaire **50** du premier dispositif de filtrage. La valeur d'inductance équivalente du premier dispositif de filtrage **44** est donc réduite. Un intérêt est d'adapter la valeur de l'inductance équivalente à la configuration de fonctionnement, afin de réduire les pertes. L'organe sectionneur **52** du deuxième dispositif de filtrage **46** est maintenu en position ouverte afin d'insérer l'inductance secondaire **50** en série avec l'inductance primaire du deuxième dispositif de filtrage **46.**

Sans sortir du cadre de l'invention, il pourrait être décidé de placer le convertisseur de tension dans une autre configuration de fonctionnement dégradé, dans laquelle le deuxième pôle **65** de la première portion de réseau d'alimentation électrique continu **60** serait déconnecté du bras **16** et des modules de conversion **18,20,22,24** du convertisseur de tension. Pour ce faire, le deuxième dispositif coupe-circuit **32** est placé en position ouverte et le premier dispositif coupe-circuit **30** est maintenu en position fermée. En outre, les premier et deuxième interrupteurs de retour **36,38** sont également placés en position fermée. L'organe sectionneur **52** du premier dispositif de filtrage **44** est alors placé en position ouverte tandis que l'organe sectionneur **52** du deuxième dispositif de filtrage **46** est placé en position fermée.

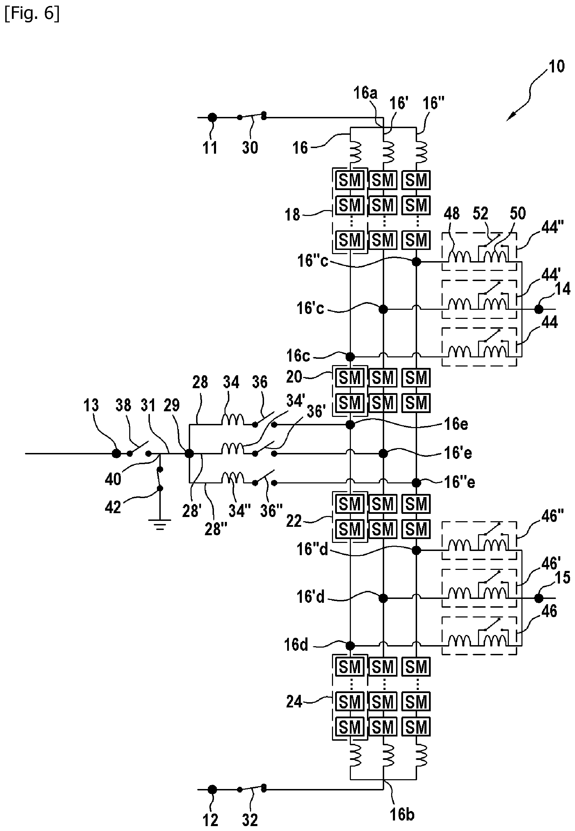

La figure **6** illustre un deuxième mode de réalisation d'un convertisseur de tension **10** selon l'invention. Dans ce deuxième mode de réalisation, le convertisseur de tension comprend trois bras **16,16',16"** connectés en parallèle les uns des autres, entre un point supérieur **16a** et un point inférieur **16b.** Comme dans l'exemple précédent, les bras comprennent chacun un premier point intermédiaire **16c,16'c,16"c,** un deuxième point intermédiaire **16d,16'd,16"d** et un point milieu **16e,16'e',16"e.** Chaque bras comprend également quatre modules de conversion électrique **18,20,22,24.**

Le convertisseur de tension **10** comprend trois lignes de liaison au retour **28,28',28"** chacune s'étendant entre un point milieu **16e,16'e,16"e** d'un des bras **16,16',16"** et un point de jonction **29** commun à chacune des lignes de liaison. Le convertisseur de tension **10** comprend trois dispositifs de découplage **34,34',34",** chacun étant connecté dans une des lignes de liaison **28,28',28".**

Le convertisseur de tension **10** comprend par ailleurs un trois premiers interrupteurs de retour **36,36',36",** chacun étant connecté en série avec un dispositif de découplage **34,34',34"** dans une des lignes de liaison au retour **28,28',28".**

Dans cet exemple non limitatif, le convertisseur de tension comprend un unique deuxième interrupteur de retour **38** connecté entre le point de jonction **29** et le troisième terminal continu **13,** en série avec l'ensemble des dispositifs de découplage **34,34',34".** Dès lors, la mise en position ouverture dudit deuxième interrupteur de retour **38** permet de déconnecter la ligne de retour **63** de la première portion de réseau d'alimentation électrique continu **60** par rapport aux dispositifs de découplage **34,34',34"** et aux bras **16,16',16".** Alternativement, et sans sortir du cadre de l'invention, le convertisseur de tension peut comprendre trois deuxièmes interrupteurs de retour, chacun étant connecté dans une des lignes de liaison au retour **28,28',28",** entre le dispositif de découplage correspondant et le point de jonction **29.**

Par ailleurs, le deuxième interrupteur de retour **38** est relié au point de jonction **29** par une liaison électrique **31** présentant un point de connexion à la terre **40** relié à la terre par l'intermédiaire d'un interrupteur de mise à la terre **42** commandable.

Dans ce deuxième mode de réalisation, le convertisseur de tension comprend de plus trois premiers dispositifs de filtrage **44,44',44"** identiques au premier dispositif de filtrage du premier mode de réalisation. Le convertisseur de tension comprend en outre trois deuxièmes dispositifs de filtrage **46,46',46"** identiques au deuxième dispositif de filtrage du premier mode de réalisation. Chacun des premiers dispositifs de filtrage **44,44',44"** est connecté entre le premier point intermédiaire **16c,16'c,16"c** d'un des bras **16,16',16"** et le quatrième terminal continu **14.** Chacun des deuxièmes dispositifs de filtrage **46,46',46"** est connecté entre le deuxième point intermédiaire **16d,16'd,16"d** d'un des bras **16,16',16"** et le cinquième terminal continu **15.**

Dans ce deuxième mode de réalisation, le convertisseur de tension n'est pas pourvu de filtre DC entre les premier et troisième terminaux continus **11,13,** entre les troisième et deuxième terminaux continus **13,12** et entre les quatrième et cinquième terminaux continus du convertisseur de tension **10.** En effet, dans ce mode de réalisation, les sous-modules sont commandés de sorte que la somme des courants alternatifs des bras soit nulle à chaque instant.

Dans la configuration de fonctionnement normal, illustrée en figure **6****,** on place l'ensemble des premiers interrupteurs de retour **36,36',36"** et le deuxième interrupteur de retour **38** en position ouverte. L'ouverture de ces premiers interrupteurs de retour **36,36',36"** permet d'éviter la circulation de courants indésirables entres les bras **16,16',16"** du convertisseur de tension. On place en outre l'ensemble des organes sectionneurs **52** des dispositifs de filtrage **44,44',44",46,46',46"** en position ouverte afin d'insérer les inductances secondaires **50** en série des inductances principales **48.**

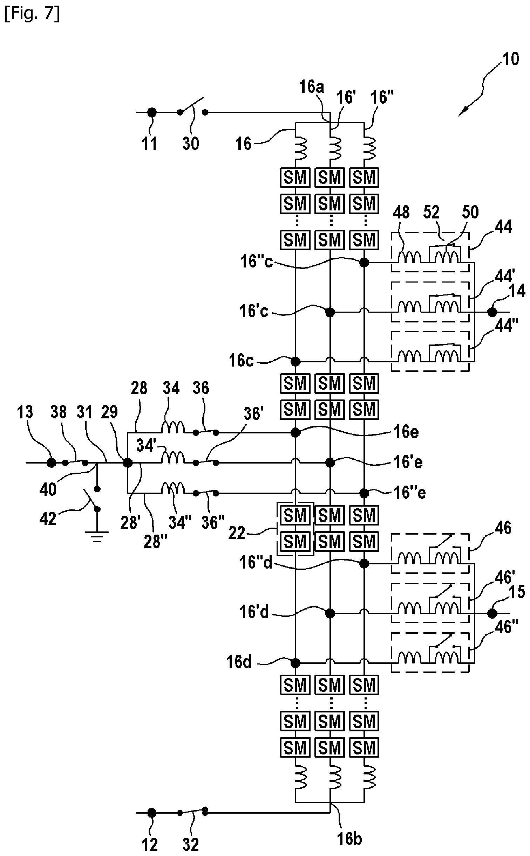

Sur la figure **7**, on a illustrée une configuration de fonctionnement dégradé dans laquelle le premier dispositif coupe-circuit **30** est placé en position ouverte afin de déconnecter le premier pôle **64** de la première portion de réseau d'alimentation électrique continu **60** par rapport aux bras **16,16',16".** Pour placer le convertisseur de tension dans cette configuration de fonctionnement dégradé, on place en outre l'ensemble des premiers interrupteurs de retour **36,36',36"** et le deuxième interrupteur de retour **38** en position fermée. On place également les organes sectionneurs **52** des premiers dispositifs de filtrage **44,44',44"** en position fermée afin de contourner les inductances secondaires **50** correspondantes et on place les organes sectionneurs des deuxièmes dispositifs de filtrage **46,46',46"** en position ouverte.

La figure **8** illustre un troisième mode de réalisation d'un convertisseur de tension **10** selon l'invention. Dans cette variante, le convertisseur de tension **10** comprend trois premiers dispositifs coupe-circuits **30,30',30",** chacun étant connecté dans un bras **16,16',16"** qui lui est propre, en série avec le premier module de conversion électrique dudit bras. Autrement dit, chacun des premiers dispositifs coupe-circuits **30,30',30"** est connecté entre le premier point intermédiaire **16c,16'c,16"c** d'un bras et le point supérieur **16a.** En outre, dans cette variante, le convertisseur de tension **10** comprend trois deuxième dispositifs coupe-circuits **32,32',32",** chacun étant connecté dans un bras **16,16',16"** qui lui est propre, en série avec le quatrième module de conversion électrique dudit bras. Autrement dit, chacun des deuxième dispositifs coupe-circuits **32,32',32"** est connecté entre le deuxième point intermédiaire **16d,16'd,16"d** d'un bras et le point inférieur **16b.**

## Revendications

1. Convertisseur de tension (10) permettant de convertir une première tension continue (U1) en une seconde tension continue (U2) et inversement, le convertisseur de tension comportant :
- des premier (11), deuxième (12) et troisième (13) terminaux continus configurés pour être reliés électriquement respectivement à une première ligne conductrice (61), une deuxième ligne conductrice (62) et une ligne de retour (63) d'une première portion de réseau d'alimentation électrique continu (60) de topologie bipôle ;
- des quatrième (14) et cinquième (15) terminaux continus configurés pour être reliés électriquement à une seconde portion de réseau d'alimentation électrique continu (70) de topologie monopôle ;
- au moins un bras (16,16',16") comprenant au moins un point supérieur (16a) et un point inférieur (16b) entre lesquels il s'étend, le point supérieur étant relié électriquement au premier terminal continu tandis que le point inférieur est relié électriquement au deuxième terminal continu, ledit au moins un bras comportant un premier module de conversion électrique (18) connecté électriquement entre le point supérieur et un premier point intermédiaire (16c,16'c,16"c) du bras, un deuxième module de conversion électrique (20) connecté électriquement entre ledit premier point intermédiaire et un point milieu (16e,16'e,16"e) du bras, un troisième module de conversion électrique (22) connecté électriquement entre ledit point milieu et un deuxième point intermédiaire (16d,16'd,16"d) du bras, et un quatrième module de conversion électrique (24) connecté électriquement entre ledit deuxième point intermédiaire et ledit point inférieur du bras, le premier point intermédiaire du bras étant connecté électriquement au quatrième terminal continu tandis que le deuxième point intermédiaire du bras est connecté électriquement au cinquième terminal continu, le point milieu étant connecté électriquement audit troisième terminal continu, au moins un interrupteur de retour (36,36',36",38) commandable étant connecté entre ledit point milieu et ledit troisième terminal continu, ledit interrupteur de retour pouvant prendre une position ouverte et une position fermée, chacun des premier, deuxième, troisième et quatrième modules de conversion électrique comprenant une chaine de sous-modules (SM) commandables individuellement par un organe de commande (T1,T2,T'1,T'2,T'3,T'4) propre à chaque sous-module et chaque sous-module comprenant un condensateur (C_{SM}), l'organe de commande de chaque sous-module pouvant prendre au moins un premier état dans lequel le condensateur est inséré dans la chaine de sous-modules et un deuxième état dans lequel le condensateur n'est pas inséré dans ladite chaine de sous-modules, au moins l'un des modules de conversion électrique comprenant une inductance (26) connectée en série avec la chaine de sous-modules dudit module de conversion électrique ;
- au moins un premier dispositif coupe-circuit (30,30',30") commandable connecté en série avec le premier module de conversion électrique entre le premier point intermédiaire dudit bras et le premier terminal continu, le premier dispositif coupe-circuit pouvant prendre une position ouverte et une position fermée; et
- au moins un deuxième dispositif coupe-circuit (32,32',32") commandable connecté en série avec le quatrième module de conversion électrique entre le deuxième point intermédiaire dudit bras et le deuxième terminal continu, le deuxième dispositif coupe-circuit pouvant prendre une position ouverte et une position fermée.

2. Convertisseur selon la revendication 1, dans lequel ledit premier dispositif coupe-circuit (30) est disposé entre le point supérieur (16a) dudit bras (16,16',16") et le premier terminal continu (11), tandis que le deuxième dispositif coupe-circuit (32) est disposé entre le point inférieur (16b) du bras et le deuxième terminal continu (12).

3. Convertisseur de tension selon la revendication 1 ou 2, comprenant en outre au moins un dispositif de découplage (34,34',34") connecté électriquement en série avec ledit au moins interrupteur de retour (36,36',36",38) entre ledit point milieu (16e,16'e,16"e) du bras (16,16',16") et ledit troisième terminal continu (13), ledit dispositif de découplage étant configuré pour limiter la circulation d'un courant électrique alternatif vers ledit troisième terminal continu.

4. Convertisseur de tension selon la revendication 3, dans lequel un premier interrupteur de retour (36,36',36") commandable est connecté en série avec le dispositif de découplage (34,34',34''), entre ledit dispositif de découplage et ledit point milieu (16e,16'e,16"e) du bras (16,16',16"), et dans lequel un deuxième interrupteur de retour (38) commandable est connecté en série avec le dispositif de découplage, entre ledit dispositif de découplage et ledit troisième terminal continu (13).

5. Convertisseur de tension selon la revendication 4, dans lequel le dispositif de découplage (34,34',34") est relié à l'un des premier et deuxième interrupteurs de retour commandable par une liaison électrique (31), ladite liaison électrique présentant un point de connexion (40) à la terre relié à la terre par l'intermédiaire d'un interrupteur de mise à la terre (42) commandable.

6. Convertisseur de tension selon l'une quelconque des revendications 1 à 5, comprenant en outre au moins un premier dispositif de filtrage (44,44',44") connecté électriquement entre ledit premier point intermédiaire (16c,16'c,16"c) du bras (16,16',16") et ledit quatrième terminal continu (14), ledit premier dispositif de filtrage étant configuré pour limiter la circulation d'un courant électrique alternatif vers ledit quatrième terminal continu.

7. Convertisseur de tension selon la revendication 6, dans lequel le premier dispositif de filtrage (44,44',44") présente une valeur d'inductance équivalente réglable.

8. Convertisseur de tension selon la revendication 7, dans lequel ledit premier dispositif de filtrage (44,44',44") comprend une inductance principale (48) et une inductance secondaire (50) connectées en série l'une par rapport à l'autre entre le premier point intermédiaire (16c,16'c,16"c) et le quatrième terminal continu (14), le premier dispositif de filtrage comprenant en outre un organe sectionneur (52) connecté en parallèle de l'inductance secondaire et pouvant prendre une position ouverte ou une position fermée dans laquelle ladite inductance secondaire est contournée.

9. Convertisseur de tension selon l'une quelconque des revendications 1 à 8, dans lequel au moins 10% des sous-modules (SM) des premier (18) et quatrième (24) modules de conversion électrique présentent une topologie en demi-pont.

10. Convertisseur de tension selon l'une quelconque des revendications 1 à 9, comprenant une pluralité de bras (16,16',16") connectés en parallèle les uns par rapport aux autres, chaque bras comprenant un point supérieur (16a) et un point inférieur (16b) entre lesquels il s'étend, le point supérieur de chacun des bras étant relié électriquement au premier terminal continu (11) tandis que le point inférieur de chacun des bras est relié électriquement au deuxième terminal continu (12), chaque bras comportant un premier module de conversion électrique (18) connecté électriquement entre le point supérieur et un premier point intermédiaire (16c,16'c,16"c) dudit bras, un deuxième module de conversion électrique (20) connecté électriquement entre ledit premier point intermédiaire et un point milieu (16e,16'e,16"e) dudit bras, un troisième module de conversion électrique (22) connecté électriquement entre ledit point milieu et un deuxième point intermédiaire (16d,16'd,16"d) dudit bras, et un quatrième module de conversion électrique (24) connecté électriquement entre ledit deuxième point intermédiaire et ledit point inférieur du bras, le premier point intermédiaire de chacun des bras étant connecté électriquement au quatrième terminal continu (14) tandis que le deuxième point intermédiaire de chacun des bras est connecté électriquement au cinquième terminal continu (15), le convertisseur de tension comprenant une pluralité de dispositifs de filtrage (44,44',44''), un dispositif de filtrage étant connecté électriquement entre le quatrième terminal continu et le premier point intermédiaire de chacun des bras ainsi qu'entre le cinquième terminal continu et le deuxième point intermédiaire de chacun des bras, à chacun des bras étant associé une ligne de liaison au retour (28,28',28") s'étendant chacune entre le point milieu d'un des bras et un point de jonction (29) relié électriquement audit troisième terminal continu (13), au moins un interrupteur de retour (36,36',36",38) commandable étant connecté entre le point milieu desdits bras et ledit troisième terminal continu, ledit au moins un interrupteur de retour pouvant prendre une position ouverte et une position fermée, le convertisseur de tension comprenant en outre une pluralité de dispositifs de découplage (34,34',34''), un dispositif de découplage étant connecté électriquement dans chacune des lignes de liaison au retour, en série avec au moins un interrupteur de retour commandable, entre le point milieu du bras correspondant et ledit troisième terminal continu, chacun des premier, deuxième, troisième et quatrième modules de conversion électrique comprenant une chaine de sous-modules (SM) commandables.

11. Procédé de contrôle d'un convertisseur de tension selon l'une quelconque des revendications 1 à 10, dans lequel le convertisseur de tension (10) peut être placé dans une configuration de fonctionnement normal ou dans au moins une configuration de fonctionnement dégradé, et dans lequel, pour placer le convertisseur dans ladite configuration de fonctionnement normal, on place les premier (30,30',30") et deuxième (32,32',32") dispositifs coupe-circuits en position fermée et on place le ou les interrupteur(s) de retour (36,36',36",38) en position ouverte, de manière à déconnecter le point milieu (16e,16'e,16"e) du bras du convertisseur de tension par rapport à la ligne de retour (63) de la première portion de réseau d'alimentation électrique continu (60).

12. Procédé de contrôle selon la revendication 11, dans lequel, pour placer ledit convertisseur de tension (10) dans ladite configuration de fonctionnement dégradé :
- on place l'un des premier (30,30',30") et deuxième (32,32',32") dispositifs coupe-circuits en position ouverte ;
- on place le ou les interrupteur(s) de retour (36,36',36",38) en position fermée de manière à connecter électriquement le point milieu (16e,16'e,16"e) du bras (16,16',16") à la ligne de retour (63) de la première portion de réseau d'alimentation électrique continu (60).

13. Procédé de contrôle selon la revendication 11 ou 12, dans lequel le convertisseur de tension (60) comprend au moins un dispositif de découplage (34,34',34") connecté électriquement entre ledit point milieu (16e,16'e,16"e) du bras (16,16',16") et ledit troisième terminal continu (13), ledit dispositif de découplage étant configuré pour limiter la circulation d'un courant électrique alternatif vers ledit troisième terminal continu, dans lequel un premier interrupteur de retour (36,36',36") commandable est connecté entre ledit dispositif de découplage et ledit point milieu du bras, dans lequel un deuxième interrupteur de retour (38) commandable est connecté entre ledit dispositif de découplage et ledit troisième terminal continu, dans lequel le dispositif de découplage est relié à l'un des premier et deuxième interrupteurs de retour commandable par une liaison électrique (31), ladite liaison électrique présentant un point de connexion (40) à la terre relié à la terre par l'intermédiaire d'un interrupteur de mise à la terre (42) commandable, et dans lequel, pour placer le convertisseur de tension dans la configuration de fonctionnement normal, on place le ou les interrupteur(s) de mise à la terre en position fermée.

14. Procédé de contrôle selon la revendication 13, dans lequel, pour placer le convertisseur de tension (10) dans ladite au moins une configuration de fonctionnement dégradé, on place le ou les interrupteur(s) de mise à la terre (42) en position ouverte.

15. Procédé de contrôle selon l'une quelconque des revendications 11 à 14, dans lequel le convertisseur de tension (10) comprend en outre au moins un premier dispositif de filtrage (44,44',44") comprenant une inductance principale (48) et une inductance secondaire (50) connectées en série entre le premier point intermédiaire (16c,16'c,16"c) et le quatrième terminal continu (14), le premier dispositif de filtrage comprenant en outre un organe sectionneur (52) connecté en parallèle de l'inductance secondaire et pouvant prendre une position fermée dans laquelle ladite inductance secondaire est contournée, dans lequel le convertisseur de tension comprend en outre un deuxième dispositif de filtrage (46,46',46") comprenant une inductance principale et une inductance secondaire connectées en série entre le deuxième point intermédiaire (16d,16'd,16"d) et le cinquième terminal continu (15), le deuxième dispositif de filtrage comprenant en outre un organe sectionneur connecté en parallèle de l'inductance secondaire et pouvant prendre une position fermée dans laquelle ladite inductance secondaire du deuxième dispositif de filtrage est contournée, et dans lequel, pour placer le convertisseur de tension dans la configuration de fonctionnement normal, on place lesdits organes sectionneurs des premier et deuxième dispositifs de filtrage en position ouverte.

16. Procédé de contrôle selon la revendication 15, dans lequel, pour placer le convertisseur de tension (10) dans ladite au moins une configuration de fonctionnement dégradé, on place l'organe sectionneur (52) de l'un des premier et deuxième dispositifs de filtrage (44,44',44",46,46',46") en position fermée.

17. Installation de transport de courant continu haute tension (8) comprenant :
- une première portion de réseau d'alimentation électrique continu (60) de topologie bipôle comprenant une première ligne conductrice (61), une deuxième ligne conductrice (62) et une ligne de retour (63);
- une seconde portion de réseau d'alimentation électrique continu (70)de topologie monopôle ; et
- au moins un convertisseur de tension (10) selon l'une quelconque des revendications 1 à 10,
les premier (11), deuxième (12) et troisième (13) terminaux continus du convertisseur de tension étant reliés électriquement respectivement à la première ligne conductrice, la deuxième ligne conductrice et la ligne de retour de la première portion de réseau d'alimentation électrique continu, tandis que les quatrième (14) et cinquième (15) terminaux continus du premier convertisseur de tension sont reliés électriquement à la deuxième portion de réseau d'alimentation électrique continu.
